Europäisches Patentamt

European Patent Office

Office européen des brevets

(19)

(11) Publication number: **0 044 191**
**B1**

# EUROPEAN PATENT SPECIFICATION

(12)

(45) Date of publication of patent specification: **27.06.84**

(21) Application number: **81303107.7**

(22) Date of filing: **08.07.81**

(51) Int. Cl.³: **G 01 L 1/04,** G 01 L 1/22, G 01 G 3/08

(54) Method of making a composite leaf spring for determining the magnitude of a load and a composite leaf spring manufactured by said method.

(30) Priority: **12.07.80 GB 8022876**

(43) Date of publication of application:
**20.01.82 Bulletin 82/3**

(45) Publication of the grant of the patent:
**27.06.84 Bulletin 84/26**

(84) Designated Contracting States:
**CH DE FR IT LI NL SE**

(56) References cited:
GB - A - 1 554 476
US - A - 3 411 361
US - A - 3 805 377
US - A - 4 091 680
US - A - 4 121 049
US - A - 4 144 516

(73) Proprietor: **RUBERY OWEN GROUP SERVICES LIMITED**
**P.O. Box 10 Darlaston**
**Wednesbury West Midlands WS10 8JD (GB)**

(72) Inventor: **Spear, Peter**
**Flat 4, Maycroft Ash Hill Compton Road West**
**Wolverhampton West Midlands (GB)**
Inventor: **Anson, Paul Anthony**
**93 Primley Avenue**
**Walsall West Midlands (GB).**

(74) Representative: **Stonehouse, Sidney William et al,**
**Barker, Brettell & Duncan 138 Hagley Road**
**Edgbaston**
**Birmingham B16 9PW (GB)**

Courier Press, Leamington Spa, England.

## Description

This invention relates to a method of making a composite leaf spring for determining the magnitude of a load applied to the composite leaf spring, and a composite leaf spring manufactured by said method.

There are applications where there is a need to be able to determine the magnitude of loads applied to leaf springs. Such applications include loads carried by vehicles. In some such applications it has been the practice to use strain gauges but these are generally restricted to laboratory use. These have had to be applied externally, giving rise to problems occasioned by exposure to environmental conditions and accidental damage. In the weighing of loads carried by vehicles, and the distribution thereof, various proposals have been made in the past based on measuring the deflection of vehicle springs and interposing of load cells between the load and a part or parts of a vehicle chassis. These have failed to provide a satisfactory and acceptable solution for a variety of reasons. Load cells are expensive, frictional variations in multi-leaf vehicle springs lead to inaccuracies and all such devices are difficult to protect from exposure to the elements and accidental damage.

It is known to provide composite leaf springs which have means responsive to strains induced in the leaf springs by bending. For example, in US—A—4 144 516 there is provided a solid state dual leaf spring transducer which is fabricated by photolithographic etching techniques from a wafer of, for example, silicon which typically is 10 to 20 units thick. Each leaf spring structure includes a leaf spring portion surrounded by a support structure defined by an intervening region of the wafer disposed between adjacent leaf spring structures etched into the wafer. Piezo-resistive elements are diffused into the surface of the wafer, after the etching, in locations corresponding to maximum stress of the spring structures. Two leaf spring structures are joined together in mutually opposed relation to form a composite dual leaf spring transducer. In one embodiment a transducer is secured between two capacitive wafers such that a partially hollow composite member is constituted which encloses the transducer.

In US—A—3 805 377, which relates to transducers, a cantilever beam leaf spring is made of kovar or Ni-Span-C with a layer of glass on each side. Electro-conductive leads are sputtered on to the glass and strain gauges are bonded to the glass layers, simultaneously making electrical connections with the respective leads. The strain gauges and leads are applied to the outer surfaces of the glass layers and remain fully exposed, the object being to avoid stressing of the strain gauges by the leads and also to avoid encapsulating each entire lead.

In GB—A—1 554 476 a transducer is bolted externally to an axle or equalizer beam of a vehicle's suspension to measure axle or beam loading. The transducer has a slightly curved beam carried by mounting blocks at its ends. Strain gauges are attached to upper and lower surfaces of the curved beam. External leads from the strain gauges pass through a mounting block to an electrical connector secured to the mounting block. A protective sleeve sheaths the curved beam between its end, and a cover is fitted over the complete assembly.

Our invention is concerned with providing a composite leaf spring which is load-bearing and incorporates within its structure fully enclosed means for use in determining the magnitude of a load applied to the composite leaf spring. The composite leaf spring thus made may be used for the weighing of vehicle loads, although its use is not in any way limited solely to that application.

According to one aspect the present invention consists in a method of making a composite leaf spring for determing the magnitude of a load, comprising the steps of superimposing a first outer spring element, an inner spring element and a second outer spring element and bonding the elements together, characterised in that the inner spring element is made by superimposing a plurality of layers of cured resin impregnated fibres, in that each outer spring element is made from one or more layers of spring material, in that during laying up of said layers a first strain responsive member is introduced into a part of said composite leaf spring in which a bending moment is induced when a load is applied, said first strain responsive member being orientated so as to be subjected to a strain resulting from said bending moment, whereby said first strain responsive member is located, embedded and secured within said composite leaf spring, and in that first signalling means are located to extend between said first strain responsive member and an end of said composite leaf spring so as to be embedded within said composite leaf spring, said first signalling means being adapted to communicate to an indicator or monitoring device a signal from said first strain responsive member.

According to a further aspect the invention consists in a composite leaf spring for determining the magnitude of a load manufactured by the method aforesaid.

The composite leaf spring may be made of, or may include, cured fibre reinforced resin. The outer spring elements may, for example, be metal leaf springs or fibres of metal, carbon, glass or thermoplastic material (or any combination of these) incorporated in a matrix of cured resin. The inner spring element may be made of cured fibre reinforced resin, for example glass or jute fibre. The three spring elements may be co-extensive over all, or most, of their lengths.

A thermoplastic or resilient coating may be applied to the composite leaf spring to encase it for protective purposes. This coating may, for example, be of rubber or polyurethane, in paint or plastic form, polyethylene or polypropylene. If metal spring leaves are used in the composite leaf spring they may be exposed, or embedded in a protective coating.

The first strain responsive member may be located and held within the composite leaf spring so as to respond, for example, to a tensile, compressive or torsional strain (or any combination of these) induced in the composite leaf spring when a load is applied.

A second strain responsive member and second signalling means may be located to be embedded within the composite leaf spring, said second signalling means being adapted to communicate to the indicator or monitoring device a signal from the second strain responsive member. The first and second strain responsive members may be located at positions within the composite leaf spring such that the first strain responsive member is spaced from the neutral plane of the composite leaf spring, i.e. from a plane where no bending moment is induced when the load is applied, and the second strain responsive member is at said neutral plane so that the resultant of the first and second signals taken together is a function of a strain detected by the first strain responsive member. Alternatively the first and second strain responsive members may be located at positions within the composite leaf spring such that both of the strain responsive members are spaced from said neutral plane of the composive leaf spring so that the resultant or summation of the first and second signals taken together is a function of the strains detected by the first and second strain responsive members.

The first and second strain responsive members may comprise strain gauges spaced longitudinally in the composite leaf spring and mounted in the same longitudinal plane through the composite leaf spring and orientated in the same direction.

The strain gauges may be mounted on a carrier strip or incorporated in a printed circuit whereby they are accurately located relative to one another, the carrier strip or printed circuit being bonded into the composite leaf spring.

The first and second strain responsive members may be orientated in the same direction or in different directions. They may be spaced from one another in a direction away from said neutral plane. Where the first and second strain responsive members comprising respective strain gauges are spaced from said neutral plane of the composite leaf spring as aforesaid, they may be spaced longitudinally in the composite leaf spring and mounted in the same longitudinal plane through the composite leaf spring and and orientated in the same direction.

Preferably the strain responsive member or members are oriented in the direction of strain in the composite leaf spring.

Embodiments of the invention will now be described by way of example with reference to the accompanying drawings in which:—

*Figure 1* is a side elevation of a composite leaf spring,

*Figure 2* is a plan view of the leaf spring,

*Figure 3* is a section through the leaf spring showing two strain responsive members which are in the same longitudinal plane through the spring and in the same orientation,

*Figure 4* is a section on line A—A of Figure 3,

*Figure 5* is a section through a connecting block,

*Figure 6* is a transverse section through another composite leaf spring,

*Figures 7 and 8* are fragmentary longitudinal sections through further composite leaf springs showing alternative locations of two strain responsive members in each spring,

*Figure 9* is a fragmentary longitudinal section through yet another composite leaf spring showing locations of two strain responsive members, and

*Figures 10 and 11* are a side elevation and a plan view respectively of a composite leaf spring having two blades.

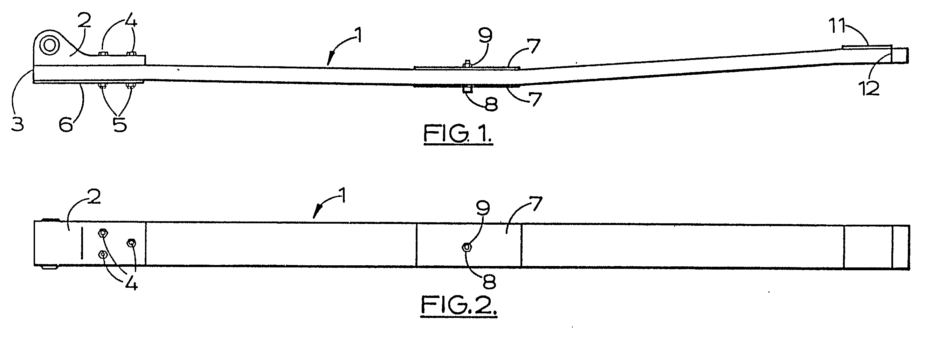

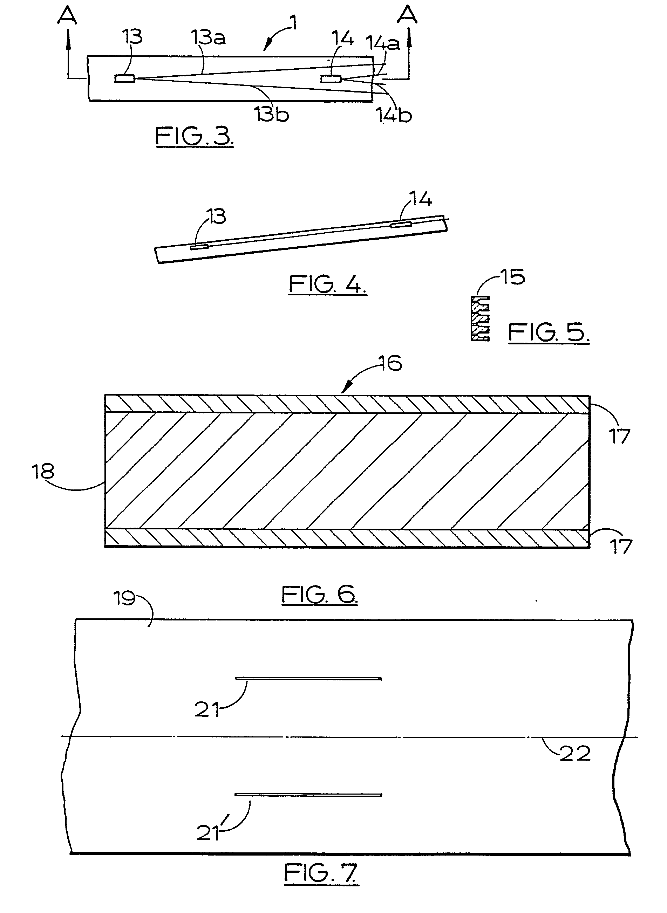

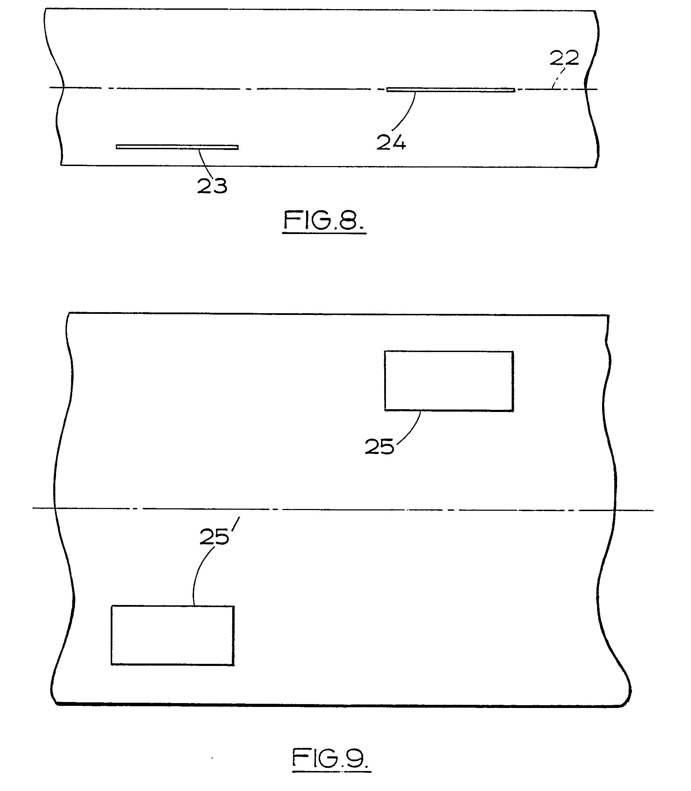

Referring to Figures 1 to 5, a composite leaf spring 1 is shown which is adapted for use in the suspension of a vehicle. The leaf spring 1 has an eye end fitting 2, which may be of forged steel, secured to the upper surface at one end 3 by through bolts 4 and nuts 5 which clamp against a steel pressure plate 6 on the lower surface of the member. Intermediate the ends of the leaf spring 1 acetal bearing pads 7 are located by a bolt 8 and nut 9 on the lower and upper surfaces of the leaf spring to facilitate the attachment of a wheel carrying axle of the vehicle. A hardened steel rubbing plate 11 is bonded to the upper surface of the leaf spring 1 at its other end 12.

The leaf spring 1 may be made of three elements in a known manner. These comprise upper and lower elements of one or more superimposed strips of pre-impregnated longitudinally extending carbon fibres, or a mix of carbon and glass fibres, and an inner element of one or more superimposed strips of pre-impregnated glass fibres. During laying up of the pre-impregnated strips two strain gauges 13, 14 and their leads 13a, 13b, 14a, 14b are introduced into the active length of the spring which experiences a bending moment on the application of a load. The gauges 13, 14 are positioned at a predetermined distance apart and away from the neutral plane of the leaf spring 1 when loaded. The leads 13a, 13b, 14a, 14b extend to the end 12 of member 1.

The laid up leaf spring 1 is cured in known manner by hot press moulding with the plate 11 located in the tool so that it is bonded to the leaf spring during curing. Alternatively, this plate may be secured by adhesive after curing.

A connector socket, not shown, is secured to each wire after curing of the leaf spring 1 and an insulating block 15 is fitted to retain these sockets whereby a plug connector with multicore cable may be inserted to carry signals from the strain gauges to suitable indicating or monitoring apparatus. The block 15 may be cast in a plastics material, may be moulded in rubber or may be fitted and secured to the end 12 of the leaf spring with the aid of adhesive.

In a spring having two strain gauges in the same orientation, and in which the load applied to the leaf spring is to be gauged by measuring the difference in strain between the gauges (i.e. the resultant of the signals emanating from the two strain gauges), the strain gauges should be sufficiently close to one another to minimise temperature differences between them. They should, however, be sufficiently far apart to obtain a satisfactory measurable difference in strain. From the difference in strain over a set known length of the leaf spring the load applied to the leaf spring can be determined. In this type of construction the two strain gauges may be mounted on or be integral with a carrier strip so that their linear spacing is accurately maintained during moulding. Alternatively they may, together with their signalling leads, be incorporated in a printed circuit which is introduced during laying up of the leaf spring.

In the design of a composite leaf spring made by the method according to the invention it will be appreciated that the operating strain of a gauge must not be exceeded in use or it will be broken. Similarly the elastic limit of the signalling wires must not be exceeded.

It will be appreciated that provision may be required in apparatus to which two or more gauges are connected to compensate for different lengths of leads from the gauges and for any change in gauge resistance occurring during moulding. If two gauges are provided which are vertically separated, that is one above the other, for example one either side of the neutral plane, this may save any requirement for lead length compensation. It can provide a satisfactory signal of difference in strain between the two gauges due to one being in compression and the other in tension. There will be a small separation between them and consequently any requirement for temperature compensation may also be avoided.

Springs of composite material generally fail suddenly and without prior warning following an overload. In a composite leaf spring made by the method according to the invention one or more strain responsive members may be adapted, in conjunction with an indicating or monitoring device, to give a warning when the design load (or any other predetermined load) is applied to the leaf spring so that overloading may be avoided. This may be facilitated by providing one or more strain responsive members in a high strain region of the leaf spring.

The number of strain responsive members to be incorporated in the leaf spring will depend on a number of factors, including space availability, the way in which it is desired to measure a load applied to the leaf spring and the degree of accuracy of measurement which is required. For example, the strain in a single strain gauge may be used to provide the required measurement. Alternatively the difference between strains in two or more strain gauges may be used, or an average of these strains. The strains in two or more gauges may be compared, or averaged and compared, with the strain in one or more other gauges.

Reference will now be made to Figure 6 in which a composite leaf spring 16 comprises outer steel spring leaves 17 which are bonded to a cured fibre, for example glass fibre, reinforced resin interior 18. One or more strain responsive members, for example in the form of strain gauges, may be located at the steel resin interface or within the resin.

In Figure 7, a composite leaf spring 19 has two strain gauges 21, 21' located and held within it equi-distance from and to either side of the neutral plane 22 of the leaf spring when loaded.

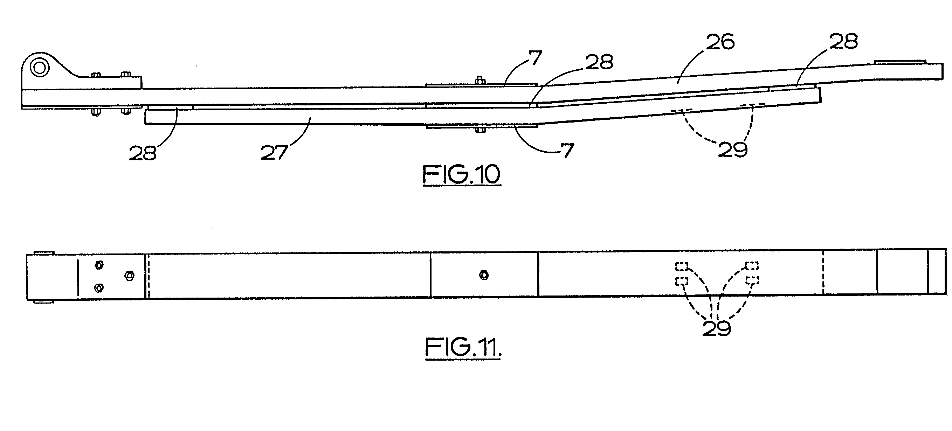

In Figure 8 a similar composite leaf spring has a strain gauge at 23 below the neutral plane 22 and a second strain gauge 24 which lies along the neutral plane.

A further variation is shown in Figure 9 in which strain gauges 25, 25' are situated in laterally spaced locations in the leaf spring.

The signalling leads for the strain gauges have been omitted from Figures 7 to 9 inclusive.

Referring now to Figures 10 and 11, a two leaf spring is shown in which the upper leaf 26 is generally similar to that described with reference to Figures 1 to 5. The lower leaf 27 may similarly be of composite material and secured to the upper leaf by means of resilient pads 28, for example of neoprene, which are bonded to the two leaves at spaced locations. Bearing pads, as 7, are located above the upper leaf 26 and below the lower leaf 27. A strain responsive member or members may be incorporated in either the upper leaf 26 or, as shown at 29, in the lower leaf. The signalling leads have also been omitted from these Figures.

The composite leaf springs which have been described are relatively flexible and in each case the deflection of the leaf spring is used to give load indication. This load indication can provide a facility for continuous recording of loads.

**Claims**

1. A method of making a composite leaf spring for determining the magnitude of a load, comprising the steps of superimposing a first outer spring element (17), an inner spring element (18) and a second outer spring element (17) and bonding the elements (17, 18) together, characterised in that the inner spring element (18) is made by superimposing a plurality of layers of cured resin impregnated fibres, in that each outer spring element (17) is made from one or more layers of spring material, in that during laying up of said layers a first strain responsive member (13, 14, 21, 21', 23, 24, 25, 25', 29) is introduced into a part of said composite leaf spring in which a bending moment is induced when a load is applied, said first strain responsive member (13, 14, 21, 21', 23, 24, 25, 25', 29) being orientated so as to be subjected to a strain resulting from said bending moment whereby said first strain responsive member (13, 14, 21, 21', 23, 24, 25, 25', 29) is located, embedded and secured within said composite leaf spring, and in that first signalling means (13a, 13b,) are located to extend between said first strain responsive member (13, 14, 21, 21', 23, 24, 25, 25', 29) and an end of said composite leaf spring so as to be embedded within said composite leaf spring, said first signalling means (13a, 13b) being adapted to communicate to an indicator or monitoring device a signal from said first strain responsive member (13, 14, 21, 21', 23, 24, 25, 25', 29).

2. A method according to claim 1 characterised in that each said outer spring element (17) is made by superimposing a plurality of layers of cured resin impregnated fibres which are predominantly longitudinally orientated and wherein said outer and inner spring elements (17, 18) and the layers of which they are composed are respectively bonded together by a hot press moulding operation.

3. A method according to claim 1 characterised in that at least one of said outer spring elements (17) comprises a metal leaf spring element (17) and said first strain responsive member (13, 14, 21, 21', 23, 24, 25, 25', 29) is located and secured at an interface between said inner spring element (18) and said metal leaf spring element (17) or within said inner spring element (18).

4. A method according to any of claims 1 to 3 characterised in that a second strain responsive member (14, 21', 24, 25) and second signalling means (14a, 14b) are located to be embedded within said composite leaf spring, said second signalling means (14a, 14b) being adapted to communicate to the indicator or monitoring device a signal from said second strain responsive member (14, 21', 24', 25'), and in that said first and second strain responsive members (13, 21, 23, 25 and 14, 21', 24, 25' respectively) are located at position within said composite leaf spring such that said first strain responsive member (13, 21, 23, 25) is spaced from the neutral plane of said composite leaf spring, i.e. from a plane where no bending moment is induced when the load is applied, and said second strain responsive member (14, 21', 24, 25') is at said neutral plane so that the resultant of the first and second signals taken together is a function of a strain detected by said first strain responsive member (13, 21, 23, 25).

5. A method according to any of claims 1 to 3 characterised in that a second strain responsive member (14, 21', 24, 25') and second signalling means (14a, 14b) are located to be embedded within said composite leaf spring, said second signalling means (14a, 14b) being adapted to communicate to the indicator or monitoring device a signal from said second strain responsive member (14, 21', 24, 25'), and in that said first and second strain responsive members (13, 21, 23, 25 and 14, 21', 24, 25' respectively) are located at positions within said composite leaf spring such that both said first and second strain responsive members (13, 21, 23, 25 and 14, 21', 24, 25' respectively) are spaced from the neutral plane of said composite leaf spring, i.e. from a plane where no bending moment is induced when the load is applied, so that the resultant or summation of the first and second signals taken together is a function of the strains detected by said first and second strain responsive members (13, 21, 23, 25 and 14, 21', 24, 25' respectively).

6. A method according to claim 5 characterised in that said first and second strain responsive members (13, 21, 23, 25 and 14, 21', 24, 25' respectively) comprising respective strain gauges are spaced longitudinally in said composite leaf spring and mounted in the same longitudinal plane through said composite leaf spring and orientated in the same direction.

7. A method according to claim 6 characterised in that said strain gauges are mounted on a carrier strip whereby they are accurately located relative to one another and said carrier strip is bonded into said composite leaf spring.

8. A method according to claim 6 or claim 7 characterised in that said strain gauges are incorporated in a printed circuit whereby they are accurately located relative to one another and said printed circuit is bonded into said composite leaf spring.

9. A method according to claim 4 or 5 characterised in that said first and second strain responsive members (21, 23, 25, and 21', 24, 25' respectively) comprising respective strain gauges are mounted spaced from one another in a direction away from said neutral plane of said composite leaf spring.

10. A method according to any of claims 4 to 9 characterised in that intermediate the two ends of said composite leaf spring in the longitudinal direction aligned bearing pads (7) are located on and secured between upper and lower surfaces of said composite leaf spring, and in that an attachment member or rubbing pad (2, 11) is connected to each of said two ends such that said composite leaf spring is adapted for use in the suspension of a vehicle, said bearing pads (7) being adapted for connection to a wheel carrying axle of the vehicle.

11. A method according to any of claims 4 to 10 characterised in that a protective coating of rubber, polyurethane, polyethylene or polypropylene is applied to said composite leaf spring.

12. A composite leaf spring for determing the magnitude of a load manufactured by the method according to any of claims 1 to 11.

**Revendications**

1. Procédé de fabrication d'un ressort composite à lames destiné à déterminer l'amplitude d'une force, comprenant les étapes de superposition d'un premier élément externe formant ressort (17), d'un élément interne formant ressort (18) et d'un second élément externe formant ressort (17) et le collage des éléments (17, 18) les uns aux autres, caractérisé en ce que l'élément interne formant ressort (18) est formé par superposition de plusieurs couches de fibres imprégnées de résine polymérisée, en ce que chaque élément externe formant ressort (17) est formé d'une ou plusieurs couches d'un matériau à ressort, en ce que, pendant la mise en place desdites couches, un premier organe sensible à une déformation (13, 14, 21, 21', 23, 24, 25, 25', 29) est introduit dans une partie du ressort composite à lames dans laquelle un moment de flexion est induit lorsqu'une force est appliquée, le premier organe sensible à une déformation (13, 14, 21, 21', 23, 24, 25, 25', 29) ayant une orientation telle qu'il est soumis à une déformation résultant du moment de flexion, si bien que le premier organe sensible à une déformation (13, 14, 21, 21', 23, 24, 25, 25', 29) est positionné, enrobé et fixé dans le ressort composite à lames, et en ce qu'un premier dispositif de signalisation (13a, 13b) est disposé de manière qu'il se trouve entre le premier organe sensible à une déformation (13, 14, 21, 21', 23, 24, 25, 25', 29) et une extrémité du ressort composite à lames, si bien qu'il est enrobé dans le ressort composite à lames, le premier dispositif de signalisation (13a, 13b) étant destiné à communiquer à un dispositif indicateur ou de contrôle, un signal provenant du premier organe sensible à une déformation (13, 14, 21, 21', 23, 24, 25, 25', 29).

2. Procédé selon la revendication 1, caractérisé en ce que chaque élément externe formant ressort (17) est constitué par superposition de plusieurs couches de fibres imprégnées d'une résine polymérisée qui sont orientées essentiellement en direction longitudinale et dans lequel les éléments externes et interne formant ressorts (17, 18) et les couches dont ils sont composés sont liées mutuellement par une opération de moulage à la presse chauffante.

3. Procédé selon la revendication 1, caractérisé en ce qu'un au moins des éléments externes formant ressort (17) est un élément métallique formant une ressort à lames (17) et le premier organe sensible à une déformation (13, 14, 21, 21', 23, 24, 25, 25', 29) est positionné et fixé à une interface de l'élément interne formant ressort (18) et de l'élément métallique formant ressort à lame (17) ou dans l'élément interne formant ressort (18).

4. Procédé selon l'une quelconque des revendications 1 à 3, caractérisé en ce qu'un second organe sensible à une déformation (14, 21', 24, 25') et un second dispositif de signalisation (14a, 14b) sont positionnés afin qu'ils soient enrobés dans le ressort composite à lames, le second dispositif de signalisation (14a, 14b) étant destiné à communiquer au dispositif indicateur ou de contrôle, un signal provenant du second organe sensible à une déformation (14, 21', 24', 25') et en ce que le premier et le second organe sensible à une déformation (13, 21, 23, 25 et 14, 21', 24, 25' respectivement) sont disposés à des emplacements, dans le ressort composite à lames, tels que le premier organe sensible à une déformation (13, 21, 23, 25) est distant du plan neutre du ressort composite à lames, c'est-à-dire d'un plan dans lequel aucun moment de flexion n'est induit lorsqu'une force est appliquée, et le second organe sensible à une déformation (14, 21', 24, 25') se trouve au niveau du plan neutre si bien que la résultante du premier et du second signal considérés ensemble est une fonction de déformation détectée par le premier organe sensible à une déformation (13, 21, 23, 25).

5. Procédé selon l'une quelconque des revendications 1 à 3, caractérisé en ce qu'un second organe sensible à une déformation (14, 21, 24, 25') et un second dispositif de signalisation (14a, 14b) sont positionnés afin qu'ils soient enrobés dans le ressort composite à lames, le second dispositif de signalisation (14a, 14b) étant destiné à communiquer au dispositif indicateur ou de contrôle un signal provenant du second organe sensible à une déformation (14, 21', 24, 25') et en ce que le premier et le second organe sensible à une déformation (13, 21, 23, 25 et 14, 21', 24, 25' respectivement) sont disposés à des emplacements, dans le ressort composite à lames, tels que le premier et le second organe sensible à une déformation (13, 21, 23, 25 et 14, 21', 24, 25' respectivement) sont tous deux distants du plan neutre du ressort composite à lames, c'est-à-dire d'un plan dans lequel aucun moment de flexion n'est induit lorsque la force est appliquée, si bien que la résultante ou la somme du premier et du second signal considérés ensemble est une fonction des déformations détectées par le premier et le second organe sensibles à une déformation (13, 21, 23, 25 et 14, 21', 24, 25' respectivement).

6. Procédé selon la revendication 5, caractérisé en ce que le premier et le second organe sensible à une déformation (13, 21, 23, 25 et 14, 21', 24, 25' respectivement) formés de jauges dynamométriques respectives sont espacés longitudinalement dans le ressort composite à lames et sont montés dans le même plan longitudinal passant par le ressort composite à lames et sont orientés dans la même direction.

7. Procédé selon la revendication 6, caractérisé en ce que les jauges dynamométriques sont montées sur une bande de support si bien qu'elles sont positionnées avec précision l'une par rapport à l'autre et la bande de support est collée dans le ressort composite à lames.

8. Procédé selon l'une des revendications 6 et 7, caractérisé en ce que les jauges dynamométriques sont incorporées à un circuit imprimé si bien qu'elles sont positionnées avec précision l'une par rapport à l'autre et le circuit imprimé est collé dans le ressort composite à lames.

9. Procédé selon l'une des revendications 4 et 5, caractérisé en ce que le premier et le second organe sensibles à une déformation (21, 23, 25 et 21', 24, 25' respectivement) formés de jauges dynamométriques respectives sont montés à distance l'un de l'autre en direction transversale au plan neutre du ressort composite à lames.

10. Procédé selon l'une quelconque des revendications 4 à 9, caractérisé en ce que, entre les deux extrémités du ressort composite à lames dans la direction longitudinale, des patins alignés d'appui (7) sont placés sur les faces supérieures et inférieures du ressort composite à lames et fixés entre ces surfaces, et en ce qu'un organe de fixation ou un patin de frottement (2, 11) est raccordé à chacune des deux extrémités de manière que le ressort composite à lames soit adapté à une utilisation dans la suspension d'un véhicule, les patins d'appui (7) étant destinés à être raccordés à un essieu de support de roues d'un véhicule.

11. Procédé selon l'une quelconque des revendications 4 à 10, caractérisé en ce qu'un revêtement protecteur de caoutchouc, de polyuréthanne, de polyéthylène ou de polypropylène est appliqué sur le ressort composite à lames.

12. Ressort composite à lames destiné à la détermination de l'amplitude d'une force, fabriqué par le procédé selon l'une quelconque des revendications 1 à 11.

## Patentansprüche

1. Verfahren zum Herstellen einer Verbundblattfeder zum Bestimmen der Größe einer Belastung; bei dem ein erstes äußeres Federelement (17), ein inneres Federelement (18) und ein zweites äußeres Federelement (17) übereinander gelegt und die Elemente (17, 18) miteinander verbunden werden, dadurch gekennzeichnet, daß das innere Federelement (18) dadurch hergestellt wird, daß mehrere Schichten aus mit ausgehärtetem Harz imprägnierten Fasern übereinander angeordnet werden, daß jedes äußere Federelement (17) aus einer oder mehreren Federmaterial-Schichten hergestellt wird, daß während des Auflegens der Schichten ein erstes auf Zug ansprechendes Element (13, 14, 21, 21', 23, 24, 25, 25', 29) in einen Teil der Verbundblattfeder eingegeben wird, in den ein Biegemoment eingeleitet wird, wenn eine Last einwirkt, daß das erste auf Zug ansprechende Element (13, 14, 21, 21', 23, 24, 25, 25', 29) derart orientiert ist, daß es einer aus dem Biegemoment resultierenden Zugbeanspruchung ausgesetzt wird, wodurch das erste auf Zug ansprechende Element (13, 14, 21, 21', 23, 24, 25, 25', 29) in der Verbundblattfeder positioniert, eingebettet und befestigt wird, und daß eine erste Signal-gebereinrichtung (13a, 13b) derart angeordnet wird, daß sie sich zwischen dem ersten auf Zug ansprechenden Element (13, 14, 21, 21', 23, 24, 25, 25', 29) und einem Ende der Verbundblattfeder erstreckt, um in der Verbundblattfeder eingebettet zu sein, wobei die erste Signalgebereinrichtung (13a, 13b) derart ausgebildet ist, daß sie von dem ersten auf Zug ansprechenden Element (13, 14, 21, 21', 23, 24, 25, 25', 29) ein Signal an ein Anzeige- oder Überwachungsgerät liefert.

2. Verfahren nach Anspruch 1, dadurch gekennzeichnet, daß jedes äußere Federelement (17) dadurch hergestellt wird, daß mehrere Schichten aus mit ausgehärtetem Harz imprägnierten Fasern, die vorherrschend in Längsrichtung orientiert sind, übereinander angeordnet werden, und daß die äußeren Federelemente und das innere Federelement (17, 18) sowie die Schichten, aus denen sie zusammengesetzt sind, jeweils durch Warmpreßformung miteinander verbunden werden.

3. Verfahren nach Anspruch 1, dadurch gekennzeichnet, daß mindestens eines der äußeren Federelemente (17) ein Metal-Blattfederelement (17) aufweist, und daß das erste auf Zug ansprechende Element (13, 14, 21, 21', 23, 24, 25, 25', 29) an der Berührungsfläche zwischen dem inneren Federelement (18) und dem Metall-Blattfederelement (17) oder innerhalb des inneren Federelements (18) positioniert und befestigt wird.

4. Verfahren nach einem der Ansprüche 1 bis 3, dadurch gekennzeichnet, daß ein zweites auf Zug ansprechendes Element (14, 21', 24, 25') und eine zweite Signalgebereinrichtung (14a, 14b) so angeordnet werden, daß sie in der Verbundblattfeder eingebettet sind, daß die zweite Signalgebereinrichtung (14a, 14b) derart ausgebildet ist, daß sie von dem zweiten auf Zug ansprechenden Element (14, 21', 24', 25') ein Signal an das Anzeige- oder Überwachungsgerät liefert, und daß das erste und das zweite auf Zug ansprechende Element (13, 21, 23, 25 bzw. 14, 21', 24, 25') innerhalb der Verbundblattfeder an solchen Stellen angeordnet sind, daß das erste auf Zug ansprechende Element (13, 21, 23, 25) von der neutralen Ebene der Verbundblattfeder, d.h. der Ebene, wo kein Biegemoment eingeleitet wird, wenn eine Last aufgebracht wird, mit Abstand angeordnet ist, und das zweite auf Zug ansprechende Element (14, 21', 24, 25') an der neutralen Ebene liegt, so daß die Resultierende aus dem ersten und dem zweiten, damit zusammengenommenen Signal, eine Funktion einer Zugbelastung ist, die durch das erste auf Zug ansprechende Element (13, 21, 23, 25) erfaßt wird.

5. Verfahren nach einem der Ansprüche 1—3, dadurch gekennzeichnet, daß ein zweites auf Zug ansprechendes Element (14, 21', 24, 25') und eine zweite Signalgebereinrichtung (14a, 14b) so angeordnet werden, daß sie in der Verbundblattfeder eingebettet sind, daß die zweite Signalgebereinrichtung (14a, 14b) derart ausgebildet ist, daß sie von dem zweiten auf Zug ansprechenden Element (14, 21', 24, 25') ein Signal an das Anzeige- oder Überwachungsgerät liefert, und daß das erste und das zweite auf Zug ansprechende Element (13, 21, 23, 25 bzw. 14, 21', 24, 25') in der Verbundblattfeder an solchen Stellen angeordnet sind, daß sowohl das erste als auch das zweite auf Zug ansprechende Element (13, 21, 23, 25 bzw. 14, 21', 24, 25') von der neutralen Ebene der Verbundblattfeder, d.h. von einer Ebene, wo kein Biegemoment eingeleitet wird, wenn eine Belastung erfolgt, mit Abstand angeordnet sind, so daß die Resultierende oder die Summe des ersten und des zweiten, damit zusammengenommenen Signals, eine Funktion der Zugbeanspruchungen ist, die durch das erste und das zweite auf Zug ansprechende Element (13, 21, 23, 25 bzw. 14, 21', 24, 25') erfaßt werden.

6. Verfahren nach Anspruch 5, dadurch gekennzeichnet, daß das erste und das zweite auf Druck ansprechende Element (13, 21, 23, 25 bzw. 14, 21', 24, 25') jeweils einen Dehnungsmesser aufweisen, die in Längsrichtung der Verbundblattfeder mit Abstand angeordnet sind und in derselben, durch die Verbundblattfeder laufenden Längsebene montiert sind und in dieselbe Richtung orientiert sind.

7. Verfahren nach Anspruch 6, dadurch gekennzeichnet, daß die Dehnungsmesser auf einem Trägerstreifen montiert werden, wodurch sie in bezug aufeinander exakt positioniert werden, und daß der Trägerstreifen in die Verbundblattfeder eingebunden wird.

8. Verfahren nach Anspruch 6 oder 7, dadurch gekennzeichnet, daß die Dehnungsmesser in eine gedruckte Schaltung eingearbeitet werden, wodurch sie in bezug aufeinander exakt positioniert werden, und daß die gedruckte Schaltung in die Verbundblattfeder eingebunden wird.

9. Verfahren nach Anspruch 4 oder 5, dadurch gekennzeichnet, daß das erste und das zweite auf Zug ansprechende Element (21, 23, 25 bzw. 21', 24, 25') jeweils Dehnungsmesser aufweisen, die mit Abstand voneinander in einer von der neutralen Ebene der Verbundblattfeder fortweisenden Richtung mit Abstand voneinander angeordnet sind.

10. Verfahren nach einem der Ansprüche 4 bis 9, dadurch gekennzeichnet, daß zwischen den beiden Enden der Verbundblattfeder in Längsrichtung ausgerichtete Lagerstücke (7) auf der Ober- und der Unterseite der Verbundblattfeder angeordnet und befestigt sind, und daß mit jedem der beiden Enden ein Befestigungsglied oder ein Gummikissen (2, 11) verbunden ist, so daß sich die Verbundblattfeder für eine Fahrzeugaufhängung eignet, wobei die Lagerstücke (7) für die Verbindung mit einer Fahrzeug-Radachse ausgebildet sind.

11. Verfahren nach einem der Ansprüche 4—10, dadurch gekennzeichnet, daß auf die Verbundblattfeder ein Schutzüberzug aus Gummi, Polyurethan, Polyäthylen oder Polypropylen aufgebracht wird.

12. Verbundblattfeder zum Bestimmen der Größe einer Belastung, hergestellt nach dem Verfahren gemäß irgendeinem der Ansprüche 1 bis 11.

FIG.1.

FIG.2.

FIG. 3.

FIG. 4.

FIG. 5.

FIG. 6.

FIG. 7

FIG.8.

FIG.9.

FIG.10

FIG.11.

0 044 191